# FASCICULE DE BREVET EUROPEEN

(11) **EP 0 518 725 B1**
(45) Date de publication et mention de la délivrance du brevet: **20.09.1995**
(21) Numéro de dépôt: 92401492.1
(22) Date de dépôt: 01.06.1992
(51) Int. Cl.: F02B 27/02

(54) **Dispositif d'admission pour moteur à combustion interne**
Auszugvorrichtung für Brennkraftmaschine
Intake device for internal combustion engine

(30) Priorité: 13.06.1991 FR 9107238
(43) Date de publication de la demande: 16.12.1992
(73) Titulaire: AUTOMOBILES PEUGEOT, 75116 Paris (FR); AUTOMOBILES CITROEN, 92200 Neuilly-sur-Seine (FR)
(72) Inventeur: Desportes, Dominique, F-78800 Houilles (FR)
(74) Mandataire: Polus, Camille

(56) Documents cités:
- EP-A- 0 159 803
- EP-A- 0 400 952

## Description

La présente invention concerne un dispositif d'admission pour un moteur à combustion interne comprenant deux groupes de cylindres.

L'invention concerne plus particulièrement un dispositif comportant deux capacités dans chacune desquelles débouche un conduit amont du dispositif et dont chacune des capacités est reliée en aval à l'un des deux groupes de cylindres et comportant également un conduit de liaison qui relie entre elles les deux capacités avec interposition d'un moyen d'obturation du conduit de liaison dont l'ouverture est commandée en fonction d'un paramètre de fonctionnement du moteur.

Un dispositif d'admission de ce type est décrit et représenté dans le document FR-A-2.589.196.

Le principe de fonctionnement d'un tel dispositif est le suivant :
- pour des faibles régimes de rotation du moteur, chaque rangée de cylindres, par exemple dans le cas d'un moteur à six cylindres en V, est alimentée de façon séparée par une capacité acoustique constituée par le volume d'un répartiteur et une inductance acoustique constituée par l'une des branches séparées de la partie amont en Y du dispositif d'admission ; et
- pour des régimes élevés de rotation du moteur, les deux volumes répartiteurs ou capacités acoustiques, sont mis en communication et il en résulte de ce fait, comme cela est souhaitable pour un fonctionnement optimal du moteur, une réduction globale de l'inductance acoustique.

Grâce à l'utilisation d'un tel dispositif, la puissance maximale est obtenue lorsque l'inductance acoustique de la liaison entre les deux volumes répartiteurs tend vers une valeur nulle, et notamment grâce à l'utilisation d'une section de passage particulièrement importante qui s'étend sur une longueur réduite.

Du point de vue acoustique, les pressions instantanées s'égalisent dans les deux capacités de répartition et les caractéristiques acoustiques du système d'admission deviennent équivalentes à celles d'un volume unique qui alimente alors les deux rangées de cylindres, configuration optimale pour les performances à hauts régimes.

Dans toutes les applications connues d'un tel dispositif d'admission à inductance variable, la mise en communication des deux capacités est réalisée au moyen d'un papillon ou volet qui est disposé dans un conduit de liaison entre les deux capacités et qui est monté pivotant autour d'un axe généralement perpendiculaire à l'axe du conduit de liaison.

On constate toutefois qu'un tel agencement présente un encombrement trop important qui en interdit l'utilisation pour l'alimentation de certains moteurs, et notamment de moteurs dont les cylindres sont agencés en V avec un angle réduit entre les rangées de cylindres.

Les documents EP-A-0 400 952, qui est considéré comme l'état de la technique le plus proche, et EP-A-0 159 803 proposent un dispositif d'admission du type mentionné précédemment dans lequel les deux conduits amont débouchent dans le conduit de liaison de part et d'autre du moyen d'obturation, mais dont la réalisation et l'assemblage sont particulièrement complexes.

L'invention a pour but de proposer une conception simple d'un tel dispositif d'admission qui permet d'en réduire le volume et l'encombrement global.

Dans ce but, l'invention a pour objet un dispositif d'admission pour moteur à combustion interne comprenant deux groupes de cylindres, le dispositif comportant une capacité qui est divisée par une cloison en deux capacités dans chacune desquelles débouche un conduit amont du dispositif ; lesdits conduits amont sont réalisés sous la forme d'une tubulure unique divisée en deux parties par une cloison plane ; chacune desdites capacités est reliée en aval à l'un des deux groupes de cylindres et un conduit de liaison qui relie entre elles les deux capacités avec interposition d'un moyen d'obturation du conduit de liaison dont l'ouverture est commandée en fonction d'un paramètre de fonctionnement du moteur, et du type dans lequel les deux conduits d'admission débouchent dans le conduit de liaison de part et d'autre du moyen d'obturation, caractérisé en ce que le conduit de liaison est un tronçon tubulaire qui assure la liaison entre l'extrémité aval de ladite tubulure unique d'admission et les deux capacités, à l'intérieur duquel un volet d'obturation est monté pivotant autour d'un axe parallèle à l'axe du tronçon tubulaire entre une position fermée dans laquelle il délimite deux passages de liaison dont chacun est relié en amont à l'un desdits conduits amont et en aval à l'une desdites capacités et une position ouverte, les deux conduits amont sont juxtaposés au niveau de leur raccordement avec l'extrémité amont du tronçon tubulaire en étant séparés par ladite cloison plane qui prolonge le volet et qui lui est parallèle lorsque ce dernier est dans sa position fermée, et en ce que les deux capacités sont juxtaposées au niveau de leur raccordement avec l'extrémité aval du tronçon tubulaire en étant séparées par ladite cloison qui prolonge le volet et qui est en alignement avec lui lorsque ce dernier est dans sa position fermée.

Selon d'autres caractéristiques de l'invention:
- l'axe du volet est un arbre de commande monté à rotation à travers la tubulure à profil coudé ;
- la tubulure amont est réalisée par moulage, la cloison diamétrale étant réalisée venue de matière sous forme d'une toile de moulage.

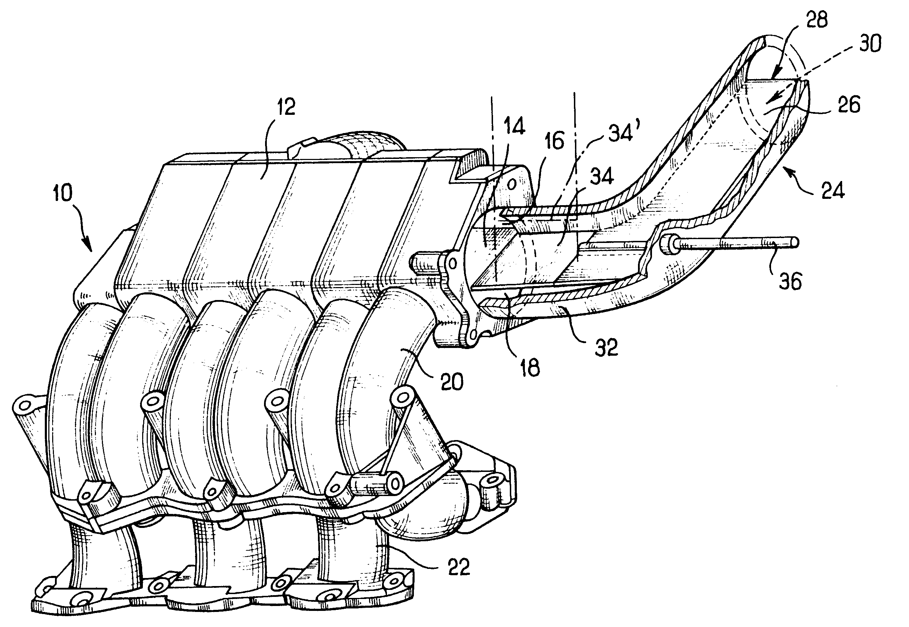

D'autres caractéristiques et avantages de l'invention apparaîtront à la lecture de la description détaillée qui va suivre pour la compréhension de laquelle on se reportera au dessin annexé dont la figure unique est une vue en perspective avec arrachement partiel d'un dispositif d'admission réalisé conformément aux enseignements de l'invention pour l'alimentation d'un moteur à combustion interne à deux rangées de cylindres en V.

Le dispositif d'admission 10 illustré sur la figure comporte une capacité 12 qui est divisée par une cloison interne plane ou ondulée 14 en deux capacités acoustiques 16, 18 dont chacune est reliée par une série de conduits aval 20 et 22 à l'une des deux rangées de trois cylindres du moteur à combustion interne (non représenté).

L'alimentation de la capacité 12, et donc des deux capacités 16 et 18 est réalisée au moyen d'une tubulure amont 24 qui est réalisée, par exemple par moulage, avec une cloison ou toile diamétrale 26 qui la partage en deux conduits amont d'admission 28 et 30.

Dans le mode de réalisation illustré sur la figure, la tubulure unique d'admission 24 présente un profil coudé sensiblement à angle droit de manière à se terminer à l'aval par un tronçon tubulaire rectiligne 32.

Le tronçon tubulaire 32, qui sur la figure est délimité fictivement par deux lignes en traits mixtes, assure la liaison entre l'extrémité aval de la tubulure unique amont d'admission 24 et les deux capacités acoustiques 16 et 18.

Conformément à l'invention, un volet plat 34 est monté pivotant dans le tronçon tubulaire 32 autour d'un axe géométrique parallèle à l'axe longitudinal du tronçon tubulaire.

Le pivotement du volet 34 est par exemple commandé au moyen d'un arbre de commande 36 qui est monté à rotation à travers la tubulure 24 et qui est supporté par la toile de moulage 26, de manière à pouvoir provoquer le pivotement du volet 34 entre sa position fermée dans laquelle il est illustré sur la figure et une position ouverte référencée 34' dans laquelle il occupe par exemple une position sensiblement à angle droit par rapport à sa position fermée.

Dans la position fermée du volet 34, celui-ci est parallèle à la toile de séparation 26 et la prolonge ainsi que la toile de séparation 14. Dans cette configuration fermée, le conduit d'admission amont 28 communique ainsi directement avec la capacité 16 tandis que le conduit d'admission 30 communique directement avec la capacité d'admission 18 sans qu'il n'y ait aucune communication, ni entre les capacités 16 et 18, ni entre les conduits d'admission 28 et 30.

Cette configuration en position fermée correspond à celle qui est utilisée pour des faibles régimes de rotation du moteur.

Dans sa position ouverte référencée 34', le volet 34 établit une communication directe entre les deux capacités 16 et 18 dans lesquelles le fluide d'admission qui parcourt les deux conduits d'admission 28 et 30 pénètre simultanément sous la forme d'un flux unique dans la capacité 12 partagée en deux par la cloison ou toile 14.

Si l'on compare le dispositif d'admission selon les enseignements de la présente invention à celui qui est décrit et représenté dans le document FR-A-2.589.196 on arrive donc à un schéma acoustiquement équivalent dans lequel les deux conduits amont d'admission 28 et 30 débouchent dans le conduit de liaison 32 de part et d'autre du volet d'obturation 34 et non plus chacune dans une des deux cavités acoustiques 16 et 18.

## Revendications

1. Dispositif d'admission (10) pour moteur à combustion interne comprenant deux groupes de cylindres, le dispositif comportant une capacité (12) qui est divisée par une cloison (14) en deux capacités (16,18) dans chacune desquelles débouche un conduit amont (28,30) du dispositif ; lesdits conduits amont sont réalisés sous la forme d'une tubulure unique (24) divisée en deux parties par une cloison plane (26) ; chacune desdites capacités (16,18) est reliée en aval (20,22) à l'un des deux groupes de cylindres et un conduit de liaison (32) qui relie entre elles les deux capacités (16,18) avec interposition d'un moyen d'obturation (34) du conduit de liaison dont l'ouverture est commandée en fonction d'un paramètre de fonctionnement du moteur, et du type dans lequel les deux conduits d'admission (28,30) débouchent dans le conduit de liaison de part et d'autre du moyen d'obturation (34), caractérisé en ce que le conduit de liaison (32) est un tronçon tubulaire qui assure la liaison entre l'extrémité aval de ladite tubulure unique d'admission (24) et les deux capacités (16,18), à l'intérieur duquel un volet d'obturation (34) est monté pivotant autour d'un axe parallèle à l'axe du tronçon tubulaire (32) entre une position fermée dans laquelle il délimite deux passages de liaison dont chacun est relié en amont à l'un desdits conduits amont (28,30) et en aval à l'une desdites capacités (16,18) et une position ouverte (34'), en ce que les deux conduits amont (28,30) sont juxtaposés au niveau de leur raccordement avec l'extrémité amont du tronçon tubulaire (32) en étant séparés par ladite cloison plane (26) qui prolonge le volet (34) et qui lui est parallèle lorsque ce dernier est dans sa position fermée (34), et en ce que les deux capacités (16,18) sont juxtaposées au niveau de leur raccordement avec l'extrémité aval du tronçon tubulaire (32) en étant séparées par ladite cloison (14) qui prolonge le volet et qui est en alignement avec lui lorsque ce dernier est dans sa position fermée (34).

2. Dispositif d'admission selon la revendication 1, caractérisé en ce que l'axe du volet (34) est un arbre de commande (36) monté à rotation à travers la tubulure (24) à profil coudé.

3. Dispositif d'admission selon la revendication 1, caractérisé en ce que la tubulure amont est réalisée par moulage, la cloison diamétrale (26) étant réalisée venue de matière sous la forme d'une toile de moulage.

## Claims

1. Intake device (10) for an internal combustion engine comprising two groups of cylinders, the device comprising a chamber (12) which is divided by a partition (14) into two chambers (16, 18), opening into each of which is an upstream pipe (28, 30) of the device; the said upstream pipes are made in the form of a single tube (24) divided into two parts by a flat partition (26); each of said chambers (16, 18) is connected downstream (20, 22) to one of the two groups of cylinders and a connecting pipe (32) which interconnects the two chambers (16, 18) with the interposition of means (34) for closing the connecting pipe, whereof the opening is controlled as a function of an operating parameter of the engine, and of the type in which the two intake pipes (28, 30) open into the connecting pipe on either side of the closure means (34), characterised in that the connecting pipe (32) is a tubular section which ensures the connection between the downstream end of said single intake tube (24) and the two chambers (16, 18), inside which a closure flap (34) is mounted to pivot about an axis parallel to the axis of the tubular section (32) between a closed position in which it defines two connection passages, each of which is connected upstream to one of said upstream pipes (28, 30) and downstream to one of said chambers (16, 18) and an open position (34'), in that the two upstream pipes (28, 30) are juxtaposed at the level of their connection to the upstream end of the tubular section (32), being separated by said flat partition (26) which extends the flap (34) and which is parallel thereto when the latter is in its closed position (34), and in that the two chambers (16, 18) are juxtaposed at the level of their connection to the downstream end of the tubular section (32), being separated by said partition (14) which extends the flap and which is in alignment therewith when the latter is in its closed position (34).

2. Intake device according to Claim 1, characterised in that the axis of the flap (34) is a control shaft (36) mounted to rotate across the tube (24) having a bent profile.

3. Intake device according to Claim 1, characterised in that the upstream tube is made by moulding, the diametral partition (26) being produced integrally in the form of a moulding plate.

## Patentansprüche

1. Ansaugvorrichtung (10) für einen Verbrennungsmotor mit zwei Zylindergruppen, wobei die Vorrichtung ein Volumen (12) aufweist, welches durch eine Trennwand (14) in zwei Volumina (16, 18) unterteilt ist, in denen Jeweils eine stromaufseitige Leitung (28, 30) der Vorrichtung mündet; wobei die stromaufseitigen Leitungen in Form eines durch eine Trennwand (26) in zwei Teile unterteilten einzigen Rohres (24) realisiert sind; jedes der Volumina (16, 18) stromab (20, 22) mit einer der beiden Zylindergruppen und einer Verbindungsleitung (32) verbunden ist, welche die beiden Volumina (16, 18) mit Zwischenlage einer Verschließeinrichtung (34) für die Verbindungsleitung, deren Öffnen in Abhängigkeit von einem Funktionsparameter des Motors gesteuert wird, miteinander verbindet, und von einer Art, bei welcher die beiden Ansaugleitungen (28, 30) in der Verbindungsleitung beiderseits der Verschließeinrichtung (34) münden, dadurch gekennzeichnet, daß die Verbindungsleitung (32) ein Rohrstück ist, welches die Verbindung zwischen dem stromabseitigen Ende des einzigen Ansaugrohres (24) und den beiden Volumina (16, 18) gewährleistet und in dessen Innerem eine Verschlußklappe (34) um eine zur Achse des Rohrstücks (32) parallele Achse zwischen einer geschlossenen Stellung, in der sie zwei Verbindungsdurchgänge begrenzt, von denen jeder stromaufseitig mit einer der Einlaßleitungen (28, 30) und stromabseitig mit dem einen der Räume (16, 18) verbunden ist, und einer offenen Stellung (34') schwenkbar ist, daß die beiden Einlaßleitungen (28, 30) an ihrem Anschluß an das stromaufseitig gelegene Ende des Rohrstücks (32) unter Trennung durch die ebene Trennwand (26), welche die Klappe (34) fortsetzt und zu der sie parallel ist, wenn letztere in ihrer Schließstellung (34) ist, nebeneinander liegen, und daß die beiden Volumina (16, 18) an ihrem Anschluß an das stromabseitige Ende des Rohrstücks (32) unter Trennung durch die Trennwand (14), welche die Klappe fortsetzt und mit ihr in Ausrichtung ist, wenn letztere in ihre Schließstellung (34) ist, nebeneinander liegen.

2. Ansaugvorrichtung nach Anspruch 1, dadurch gekennzeichnet, daß die Achse der Klappe (34) eine Steuerwelle (26) ist, welche das Rohr (24) mit gekröpfter Kontur drehbar durchsetztend angebracht ist.

3. Ansaugvorrichtung nach Anspruch 1, dadurch gekennzeichnet, daß das stromaufseitige Rohr durch Formguß hergestellt ist, wobei die diametrale Trennwand (26) einstückig in Form eines Gießsegels realisiert ist.
